(19) **Europäisches Patentamt / European Patent Office / Office européen des brevets**

(11) **EP 2 799 606 B1**

(12) **EUROPEAN PATENT SPECIFICATION**

(45) Date of publication and mention
of the grant of the patent:
**09.10.2019 Bulletin 2019/41**

(21) Application number: **13166530.9**

(22) Date of filing: **03.05.2013**

(51) Int Cl.:
*B32B 7/12* (2006.01)   *D04H 1/593* (2012.01)
*B32B 5/02* (2006.01)   *B32B 5/04* (2006.01)
*B32B 5/14* (2006.01)   *B32B 5/26* (2006.01)
*B32B 27/12* (2006.01)   *B32B 37/14* (2006.01)
*B32B 37/12* (2006.01)   *B32B 3/26* (2006.01)
*B32B 38/00* (2006.01)

(54) **Stretch Laminate**

Elastisches Laminat

Stratifié extensible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Mondi Gronau GmbH
48599 Gronau (DE)**

(72) Inventors:
• **Baldauf, Georg
48366 Laer (DE)**

• **Schönbeck, Marcus
33775 Versmold (DE)**

(74) Representative: **Lorenz, Bernd Ingo Thaddeus et al
Andrejewski - Honke
Patent- und Rechtsanwälte Partnerschaft mbB
An der Reichsbank 8
45127 Essen (DE)**

(56) References cited:
**EP-A1- 1 686 209    EP-A1- 1 844 928
EP-A1- 1 918 092    WO-A1-92/15445
US-A1- 2009 047 855**

**Description**

The present disclosure generally relates to a stretch laminate.

Stretch laminates form one group of materials commonly used for the production of hygiene articles, such as diapers. As the name suggests, these materials are actually composites of individual components that are laminated together, through the use of an adhesive, for example. A typical stretch laminate will attempt to combine one or more layers of cover material with one or more layers or strands of an elastomeric material. A stretch laminate may hereafter also be referred to as "elastic laminate" or simply "laminate".

Complications arise in that stretch laminates are notoriously difficult and expensive to manufacture. Considerable effort has gone into proposing new types of stretch laminates and new methods for the fabrication of stretch laminates. In particular, a considerable number of patents discuss the difficulties of fabricating these laminates, and the significant and extensive steps that must be undertaken to prepare these laminates. Thus, there is a continuing need to provide new stretch laminates, new methods of fabricating better performing and/or cheaper stretch laminates, and new absorbent articles that comprise such stretch laminates.

The terms "activated" and "pre-activated" refer to a process of mechanically deforming a material in order to increase the extensibility of at least a portion of the material. A material may be activated or pre-activated by, for example, incrementally stretching the material in at least one direction.

The terms "adhesively bonded" or "adhesively laminated" refer to a laminate wherein an adhesive is used to bond an elastomeric material to at least one cover layer.

The term "attached" refers to elements being connected or united by fastening, adhering, bonding, or by any other method suitable for connecting the elements together and to their constituent materials. Many suitable methods for attaching elements together are well-known, including adhesive bonding, pressure bonding, thermal bonding, ultrasonic bonding, mechanical fastening, etc. Such attachment methods may be used to attach elements together over a particular area either continuously or intermittently.

The term "disposed" is used to mean that an element(s) is formed (joined and positioned) in a particular place or position as a unitary structure with other elements or as a separate element joined to another element.

The term "extensible" refers to the property of a material, wherein: when a biasing force is applied to the material, the material can be extended to an elongated length of at least 110% of its original relaxed length (*i.e.,* can extend 10%), without a rupture or breakage that renders the material unusable for its intended purpose. A material that does not meet this definition is considered inextensible. In some embodiments, an extensible material may be able to be extended to an elongated length of 125% or more of its original relaxed length without rupture or breakage that renders the material unusable for its intended purpose. An extensible material may or may not exhibit recovery after application of a biasing force.

Throughout the present disclosure, an extensible material is considered to be "elastically extensible" if, when a biasing force is applied to the material, the material can be extended to an elongated length of at least 110% of its original relaxed length (*i.e.,* can extend 10%), without rupture or breakage which renders the material unusable for its intended purpose, and when the force is removed from the material, the material recovers at least 40% of its elongation. In various examples, when the force is removed from an elastically extensible material, the material may recover at least 60%, or at least 80%, of its elongation.

The term "joined" refers to configurations whereby an element is directly secured to another element by attaching the element directly to the other element, and configurations whereby an element is indirectly secured to another element by attaching the element to intermediate member(s) which in turn are attached to the other element.

The term "lateral" or "transverse" refers to a direction running at a 90 degree angle to the longitudinal direction and includes directions within $\pm45°$ of the lateral direction.

The term "longitudinal" refers to a direction running parallel to the maximum linear dimension of the article and includes directions within $\pm45°$ of the longitudinal direction.

The term "recovery" refers to ability of a material to return to its original size after it has been stretched.

The "strain" or "percent strain" of a material is calculated by subtracting the original length from the stretched length, then dividing the result by the original length and multiplying by 100. The percent strain is described by the equation below:

$$\text{Percent Strain} = \%\ \text{Strain} = \text{Strain} = 100*[(Ls-L_0)/\ L_0]$$

where $L_0$ is the original length of the stretch laminate (or elastomeric film) in an arbitrary direction at the beginning of the stretch step, and Ls is the length of the stretched laminate (or elastomeric film) at the end of the stretch step. A sample stretched from an original length of 10 mm to a length of 30 mm results in a strain of 200%. Strain can be calculated in a length direction, a width direction, or any direction there between.

The "set" or "percent set" of a material is calculated by subtracting an original length from a final length, then dividing the result by the original length and multiplying by 100. The percent set is described by the equation below:

$$\text{Percent Set} = \% \text{ Set} = \text{Set} = 100*[(L_f - L_0)/L_0]$$

where $L_0$ is an original length of the stretch laminate (or elastomeric film) in an arbitrary direction at the beginning of the stretch step, and $L_f$ is a length of the relaxed stretch laminate (or elastomeric film) after it is relaxed from the stretch step. A sample is stretched from an original length of 10 mm to a length of 30 mm. Upon relaxing (removal of stress), the sample returns to 15 mm. This results in a set of 50%. Set can be calculated in a length direction, a width direction, or any direction there between.

The term "wrinkle" refers to a small fold, ridge or crease.

The stretch laminate according to the invention has at least one cover layer and an elastomeric film attached to the cover layer. The elastomeric film has two surfaces and a skin on at least one of the surfaces. In one embodiment, the elastomeric film may also be disposed between a first cover layer and a second cover layer. The elastomeric film has a first skin on a first surface closest to the first cover layer and a second skin on a second surface closest to the second cover layer.

The stretch laminate has at least one anchoring zone and at least one stretch zone, and the skin that is located in the anchoring zone has a plurality of wrinkles. These wrinkles may also be referred to as activation stripes.

In order to produce the laminate elastic strips are laminated next to one another between nonwoven material webs. The nonwoven material webs are supplied without pre-stretching and joined to the strips. The laminate thus formed is then stretched transverse to the web direction in regions rendered elastic by the laminated strips, and after elastic relaxation is wound into a roll. Due to the stretching of the laminate, which is also referred to as mechanical activation, the elastic properties of the laminate transverse to the web direction of the material web (CD, "cross direction") are improved.

EP 1 686 209 A1 discloses the stretch laminate with the features included in the preamble of claim 1.

According to a first embodiment of the method to produce a laminate according to the invention, an elastic film is stretched transverse to the web direction and, after elastic relaxation, is cut into strips. The strips are laminated next to one another between nonwoven material webs supplied without pre-stretching and joined to the strips. Last, the laminate thus formed is stretched transverse to the web direction in regions rendered elastic by the laminated strips and, after elastic relaxation, is wound into a roll. Closure elements may be punched from the material that have an elastic center region and less elastic end sections at both ends.

Stretching the elastic film mechanically pre-activates a component of the laminate and results in an improvement in the stretching behavior of the laminate. The pre-activation of the elastic film has a positive effect on the stretching force profile of the laminate and contributes to the laminate being easily stretchable over a large stretching area while greatly increasing the stretching resistance for a yield strength determined by the pre-activation of the elastic film, the stretching resistance being readily determined as the yield strength upon subsequent use of the laminate. In addition, the elastic relaxation behavior of the laminate after strain relief may be improved by using a pre-activated elastic film. However, the pre-activation of the elastic film does not replace the mechanical activation of the laminate, but instead cooperates with it synergistically. In the pre-activation of the elastic film, the film is preferably stretched essentially uniformly over its entire width. In contrast, the stretching of the laminate for mechanical activation is locally limited to the regions of the laminate that are already elastic due to the laminated strips that are pre-activated according to the invention. Due to the stretching of the laminate, fibers of the nonwoven layers are irreversibly stretched in the elastic regions of the laminate, and bonding of the nonwoven in the elastic regions is reduced due to fiber tears and fiber rearrangements. This is accompanied by a renewed mechanical effect on the material of the elastic strips, as well as a mechanical effect on localized bonds between the film surface and adjacent fibers. Areas of the laminate between the elastic regions are not altered by stretching the laminate and retain the properties of the nonwoven.

For purposes of the pre-activation, the elastic film is preferably stretched transversely by 100% to 500%. These numerical values refer to the change in length of the film transverse to the web longitudinal direction relative to the starting width of the film. The value of 100% means that the film in the stretched state has a width that is twice the starting width of the film. The stretching is not fully reversible. As the result of inelastic portions of the film, after its elastic relaxation the film has a slightly greater width than prior to the stretching. The width subsequent to the elastic relaxation may be approximately 10% to 30% greater than the starting width of the elastic film prior to transverse stretching.

For pre-activation of the elastic film, i.e. for the transverse stretching of the elastic film prior to its further processing, a stretching roller system composed of intermeshing profile rollers is preferably used. The profile rollers may in particular be composed of multiple disks that are combined into packets, the disks preferably being arranged equidistantly for uniform stretching transversely of the web.

After pre-activation, the elastic film is cut into strips. The strips are guided over deflectors and may be supplied as parallel strips to a lamination unit where the strips are laminated between nonwoven webs that are supplied on the top and bottom faces. The elastic strips are advantageously spaced from one another. The spacing between the strips may be set by positioning the deflectors. The nonwoven webs are directly joined together in the gaps between the elastic strips. It is also within the scope of the invention that the areas between the elastic strips are reinforced by co-laminated reinforcing strips. Elastic and inelastic regions may thus be formed in the laminate.

For the mechanical activation, the laminate may be guided through a nip between two profile rollers, each including at least two disk packets, having a plurality of disks, situated on an axis. The laminate is stretched in places by intermeshing disk packets of the two profile rollers. In roller sections between the disk packets, the profile rollers form a gap, through which the laminate is guided essentially without transverse stretching.

Relative to the overall width of the laminated strips, the maximum transverse stretching of the laminate for the mechanical activation corresponds to the value by which the elastic film is stretched for purposes of pre-activation. In other words, in the area of the laminated strips, the maximum stretching of the laminate is as great as that of the elastic film during its pre-activation. The transverse stretching of the laminate for the mechanical activation (relative to the overall width of the laminated strips) is preferably 50% to 90% of the value by which the film is stretched for purposes of pre-activation.

A film composed of a polyolefin elastomer is preferably used as elastic film. The pre-activation of the elastic film is particularly effective when an elastic film based on polyolefin elastomers is used.

A single-layer film or a multilayer film having an elastomeric core layer composed of styrene-isoprene-styrene (SIS) block copolymers, styrene-butadiene-styrene (SBS) block copolymers, styrene-ethylene/butylene-styrene (SEBS) block copolymers, polyurethanes, ethylene copolymers, or polyether block amides may also be used as elastic film.

The nonwoven from which the cover layers of the laminate are made has fibers made of stretchable polymers that have only slight elasticity compared to the polymer of the elastic film. The nonwoven may be composed of melt-blown fibers, staple fibers, or continuous fibers, the fibrous web formed from the fibers being mechanically, thermally, or chemically bonded. In particular, spunlace nonwovens may also be used as cover layers.

In a second method to produce a printed stretch laminate according to a preferred embodiment of the invention, the elastic film is printed with a motif made visible through the textile surface layer of the laminate before cutting the strips. Due to the fact that the elastic film is provided with the imprint, even while using the laminate that has been printed, correct alignment of the printed motif relative to the elastic region of the laminate is always ensured. The advantage therein lies in the fact that, when stretching the elastic strip, the printed image is evenly and reversibly stretched along with it. Furthermore, the printed motif is visible from the front side as well as from the back side of the laminate, for example, through a nonwoven textile surface layer, such that the laminate is optically equally attractive from the front as well as from the back. For example, the elastic film can be printed with a striped motif consisting of parallel, colored stripes extending in the direction of the web of the elastic film.

Known continuous printing methods can be used for printing the elastic film. Rotary printing processes are preferred that allow for printing the elastic film at high web speeds. The goal is web speeds of approximately 400 m/min. Gravure printing and flexography methods are advantageous processes, flexography being particularly preferred because it is possible to use one central cylinder for a plurality of color systems. Digital printing that transfers the printed image directly from a computer into a printing machine without the use of a static medium are not excluded. In particular, ink-jet printing methods are conceivable that generate a printed image by deflecting small ink drops.

The elastic film is preferably stretched transversely of the direction of the web before the printing process, then printed after elastic retraction, and subsequently cut into strips. The stretching of the elastic film constitutes a mechanical pre-activation of a layer of the laminate and results in improved stretching behavior of the laminate. The pre-activation of the elastic film has a positive effect on the course of the expansion force and provides easy stretching action of the laminate over a large area; and at an expansion limit that is determined by the pre-activation of the elastic film and after which the expansion resistance increases strongly. The return behavior of the laminate after tension is removed can also be improved if the elastic film is pre-activated by transverse stretching before laminating it into the laminate. Any pre-activation of the elastic film cannot replace but can only supplement the mechanical activation of the laminate. Even when the elastic film is pre-activated, it is still necessary for the laminate to be stretched transversely of the direction of the web in regions that are to be rendered elastic by laminated strips.

A preferred embodiment of the method according to the invention provides that the elastic film is stretched transversely of the web by more than 50% and has a width after reverse expansion that is greater than the starting width of the elastic film by 10% to 30% before it was stretched. The term "stretching" is used despite the fact that the expansion is not completely reversible but that some plastic deformation results in the film having a larger width following the reverse expansion. Later activation of the laminate essentially affects the structure of the textile surface layers. The transverse stretching of the pre-activated elastic film, on the other hand, is for the most part reversible. The printed image that is applied to the pre-activated elastic film thus does not undergo any further disadvantageous changes during subsequent activation of the laminate. Correspondingly, it is possible to improve the quality of the printed image on the elastic laminate if the elastic film is only printed following pre-activation, during which the elastic film is expanded transversely and then released.

It is possible to use a stretch-rolling apparatus of profile rollers that mesh with each other for the stretching action of the elastic film and/or the laminate.

Preferably a polyolefin elastomer film is used as the elastic film. When using an polyolefin-elastomer-based elastic film, pre-activation of the elastic film is especially advantageous.

In addition, it is also possible to use as an elastic film a single-layer or multilayer film having an elastomeric core layer made a material of styrene-isoprene-styrene block copolymers (SIS), styrene-butadiene-styrene block copolymers (SBS), styrene-ethylene-butylene-styrene block copolymers (SEBS), polyurethanes, ethylene copolymers, or polyether block amides.

After pre-activation and printing, the elastic film is cut into strips. The strips are guided across a deflector and can be supplied as parallel strips to a laminator where the strips are laminated between the textile surface layers. The elastic strips are position at a transverse spacing from each other. The transverse spacing between the strips can be adjusted by the position of the deflector. In the gaps between the elastic strips, the surface layers are directly bonded to each other. It is within the scope of the invention to use reinforcement strips that are laminated between the elastic strips so as to reinforce the gaps between the elastic strips. It is thus possible to constitute elastic and inelastic regions inside the laminate.

BRIEF DESCRIPTION OF THE DRAWINGS

Fig. 1A     is a cross-sectional view of a first embodiment of a stretch laminate according to the present disclosure;

Fig. 1B     is a cross-sectional view of a second embodiment a stretch laminate according to the present disclosure;

Fig. 2     is a SEM photomicrograph showing a cross-sectional view of a portion of an elastomeric film that has not been pre-activated;

Fig. 3     is a magnified version of the SEM photomicrograph of Fig. 2;

Fig. 4     is a SEM photomicrograph showing a cross-sectional view of a portion of a pre-activated elastomeric film;

Fig. 5     is a magnified version of the SEM photomicrograph of Fig. 4;

Fig. 6     is a transmitted light photomicrograph of a top view of a portion of an elastomeric film that has not been pre-activated;

Fig. 7     is a transmitted light photomicrograph of a top view of a portion of a pre-activated elastomeric film;

Fig. 8     is a SEM photomicrograph showing a cross-sectional view of a portion of a stretch laminate that includes an elastomeric film that has not been pre-activated.

Fig. 9     is a magnified version of the SEM photomicrograph of Fig. 8;

Fig. 10     is a SEM photomicrograph showing a cross-sectional view of a portion of a stretch laminate that includes an elastomeric film that has been pre-activated;

Fig. 11     is a magnified version of the SEM photomicrograph of Fig. 10;

Fig. 12     is a schematic illustration of a first embodiment of a continuous process for making a stretch laminate according to the present disclosure.

Fig. 13     is a schematic illustration of a second embodiment of a continuous process for making a stretch laminate according to the present disclosure.

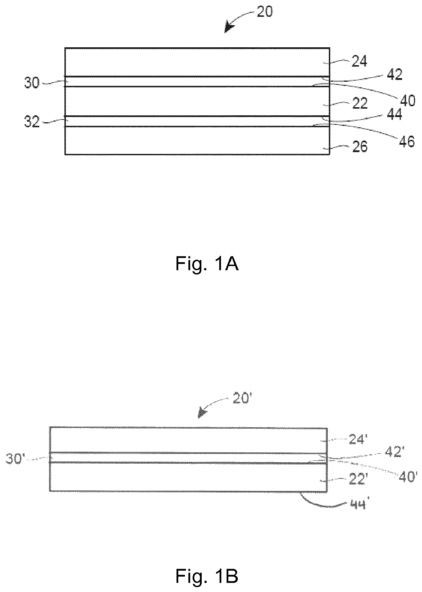

Fig. 1A illustrates an embodiment of a stretch laminate 20 according to the present disclosure. According to this embodiment, laminate 20 may include three layers: an elastomeric film 22, a first cover layer 24, and a second cover layer 26. However, according to other embodiments (as depicted in Fig. 1B), a laminate 20' may only include two layers: an elastomeric film 22' and a cover layer 24'. Although the following description will refer to the specific reference numbers in Fig. 1A, the prime versions of those numbers relating to the two layer embodiment of Fig. 1B are also intended to be considered by the reader. For example, when the description refers to "elastomeric film 22 and first cover layer 24 of stretch laminate 20", it is intended that the reader also consider the same description for "elastomeric film 22' and cover layer 24' of stretch laminate 20'."

Elastomeric film 22 and cover layers 24, 26 may be attached to each other. According to the invention, an adhesive 30, 32 is disposed between layers 22, 24, 26. As will be recognized, adhesive 30 may be initially disposed either on a first surface 40 of elastomeric film 22 or a surface 42 of cover layer 24, and adhesive 32 may similarly be initially disposed either on a second surface 44 of elastomeric film 22 or a surface 46 of cover layer 26. As assembled, adhesive 30 attaches surface 40 (and thus elastomeric film 22) to surface 42 (and thus cover layer 24), and adhesive 32 attaches surface 44 (and thus elastomeric film 22) to surface 46 (and thus cover layer 26).

While the layers 22, 24, 26 appear to overlie each other completely, this need not be the case in all embodiments. For example, cover layers 24, 26 may extend beyond elastomeric film 22, and may be attached one to the other where the layers 24, 26 extend beyond elastomeric film 22; alternatively, cover layers 24, 26 may not extend to the limits of elastomeric film 22. Also, while adhesive 30, 32 appears as a continuous layer in Figs. 1A and 1B, the adhesive may be applied as a continuous layer or in a discontinuous pattern (such as a pattern of lines, spirals, or spots). Accordingly, the bonding can be the full width of stretch laminate 20 or a partial width of the laminate (e.g., intermittent or zone bonding).

Elastomeric film 22 of stretch laminate 20 includes a single layer or multiple layer material that is elastically extensible. The elastically extensible material may be between about 10 $\mu$m and about 100 $\mu$m, or between about 20 $\mu$m and about 60 $\mu$m, or between about 30 $\mu$m and about 50 $\mu$m, or in some embodiments, about 40 $\mu$m, in thickness. The elastically extensible material may comprise an elastomeric polyolefin, and in some embodiments, a polyolefin (POE) blown film. Non-limiting examples of useful elastically extensible materials include propylene based homopolymers or co-polymers, or ethylene based homopolymers or co-polymers selected from the group consisting of: an elastic random poly(propylene/olefin) copolymer, an isotactic polypropylene containing stereoerrors, an isotactic/atactic polypropylene block copolymer, an isotactic polypropylene/random poly(propylene/olefin) copolymer block copolymer, a stereoblock elastomeric polypropylene, a syndiotactic polypropylene block poly(ethylene-co-propylene) block syndiotactic polypropylene tri-block copolymer, an isotactic polypropylene block region-irregular polypropylene block isotactic polypropylene tri-block copolymer, a polyethylene random (ethylene/olefin) copolymer block copolymer, a reactor blend polypropylene, a very low density polypropylene, a metallocene polypropylene, metallocene polyethylene, and combinations thereof. Additional non-limiting examples of useful elastically extensible materials include styrene-isoprene-styrene block copolymers, styrene-butadiene-styrene block copolymers, styrene-ethylene-butylene-styrene block co-polymers, polyurethanes, ethylene copolymers, polyether block amides, and combinations thereof.

The elastically extensible material may comprise modifying resins. Such modifying resins useful herein include, but are not limited to, unhydrogenated C5 hydrocarbon resins or C9 hydrocarbon resins, partially and fully hydrogenated C5 hydrocarbon resins or C9 hydrocarbon resins; cycloaliphatic resins; terpene resins; natural and modified rosins and rosin derivatives; coumarone indenes; polycyclopentadiene and oligomers thereof; polymethylstyrene or oligomers thereof; phenolic resins; indene polymers, oligomers and copolymers; acrylate and methacrylate oligomers, polymers, or copolymers; derivatives thereof; and combinations thereof. Modifying resins may also include alicyclic terpenes, hydrocarbon resins, cycloaliphatic resins, poly-beta-pinene, terpene phenolic resins, and combinations thereof. Useful C5 hydrocarbon resins and C9 hydrocarbon resins are disclosed in U.S. Pat. No. 6,310,154.

The elastically extensible material may comprise a variety of additives. Suitable additives including, but not limited to, stabilizers, antioxidants, and bacteriostats may be employed to prevent thermal, oxidative, and bio-chemical degradation of the elastically extensible material. Additives may account for about 0.01% to about 60% of the total weight of the elastically extensible material. In other embodiments, the composition comprises from about 0.01% to about 25%. In other suitable embodiments, the elastically extensible material comprises from about 0.01% to about 10% by weight, of additives.

The elastically extensible material may comprise various stabilizers and antioxidants that are well known in the art and include high molecular weight hindered phenols (i.e., phenolic compounds with sterically bulky radicals in proximity to the hydroxyl group), multifunctional phenols (i.e., phenolic compounds with sulfur and phosphorous containing groups), phosphates such as tris-(p-nonylphenyl)-phosphite, hindered amines, and combinations thereof. Proprietary commercial stabilizers and/or antioxidants are available under a number of trade names including a variety of Wingstay®, Tinuvin® and Irganox® products.

The elastically extensible material may comprise various bacteriostats that are known in the art. Examples of suitable bacteriostats include benzoates, phenols, aldehydes, halogen containing compounds, nitrogen compounds, and metal-containing compounds such as mercurials, zinc compounds and tin compounds. A representative example is available under the trade designation Irgasan Pa. from Ciba Specialty Chemical Corporation of Tarrytown, N.Y.

The elastically extensible material may comprise viscosity modifiers, processing aids, slip agents or anti-block agents. Processing aids include processing oils, which are well known in the art and include synthetic and natural oils, naphthenic oils, paraffinic oils, olefin oligomers and low molecular weight polymers, vegetable oils, animal oils, and derivatives of such including hydrogenated versions. Processing oils also may incorporate combinations of such oils. Mineral oil may be used as a processing oil. Viscosity modifiers are also well known in the art. For example, petroleum derived waxes can be used to reduce the viscosity of the slow recovery elastomer in thermal processing. Suitable waxes include low number-average molecular weight (e.g., 0.6-6.0 kilo Daltons) polyethylene; petroleum waxes such as paraffin wax and microcrystalline wax; atactic polypropylene; synthetic waxes made by polymerizing carbon monoxide and hydrogen such as Fischer-Tropsch wax; and polyolefin waxes.

Elastomeric film 22 also includes at least one skin disposed on the elastically extensible material, the skin forming at least one of the film's surfaces 40, 44. Such skin is an extensible material and provides an outer surface to elastomeric film 22 that has less tackiness than the underlying elastically extensible material. In some embodiments, the skin may also qualify as an elastically extensible material, but will be less elastic than the underlying elastically extensible material. Accordingly, when compared to the elastically extensible material, the skin will have less recovery from the same amount of extension. Or in other words, when compared to the elastically extensible material, the skin will have a higher percentage set from the same percentage strain. The skin may aid in elastomeric film 22 processablity and is between about 1 $\mu$m and about 10 $\mu$m, or between about 3 $\mu$m and about 7 $\mu$m, or in some embodiments, is about 5 $\mu$m, in thickness. In certain embodiments, the skin that overlays the elastically extensible material in elastomeric film 22 is a polyolefin. Non-limiting examples of useful skin materials include metallocene polyethylene, low density polyethylene, high density polyethylene, linear low density polyethylene, very low density polyethylene, a polypropylene homopolymer, a plastic random poly(propylene/olefin) copolymer, syndiotactic polypropylene, metallocene polypropylene, polybutene, an impact copolymer, a polyolefin wax, and combinations thereof.

Exemplary elastomeric films that are useful in the stretch laminates detailed herein (i.e., an elastically extensible material with at least one skin disposed on the surface of the elastically extensible material) include M18-1117 and M18-1361 elastomeric films commercially available from Clopay Corporation of Cincinnati, Ohio; K11-815 and CEX-826 elastomeric films commercially available from Tredegar Film Products of Richmond, Virginia; and elastomeric films commercially available from Mondi Gronau GmbH of Gronau, Germany. These exemplary elastomeric films include a single layer of elastically extensible material with a skin disposed on both surfaces of the material. Referring to Fig. 1A, such exemplary elastomeric films would have a skin providing first surface 40 and a second skin providing second surface 44. However, other elastomeric films applicable to the stretch laminates detailed herein only need to have a skin that provides first surface 40 or second surface 44.

The cover layers 24, 26 may include a nonwoven material, including but not limited to, spun only or spun meltblown combinations, such as SM (spunbond meltblown), SMS (spunbond meltblown spunbond), SMMS (spunbond meltblown meltblown spunbond) nonwovens, SSMMS (spunbond spunbond meltblown meltblown spunbound), hydroentangled nonwovens and softbond nonwovens. The nonwoven materials may also include carded nonwovens, such as those specially designed and manufactured to be compatible with an activation (e.g., ring-rolling) process. One exemplary nonwoven material is a carded nonwoven made from a polypropylene homopolymer. The spunbounds may also be specially designed and/or manufactured to be compatible with an activation process. However, it is believed that through the use of the elastomeric film according to the present disclosure, greater flexibility in the design choices may be achieved. For example, spunbounds may be selected for applications where only carded nonwovens were used in the past, or thinner elastomeric films may be used with the carded nonwovens. Other improvements in design flexibility will also be recognized by the skilled practitioner.

The basis weight of the nonwoven material may be less than about 30 $g/m^2$ (also referred to as "grams per square meter" or "gsm"). In fact, according to certain embodiments, the basis weight may be less than about 27 $g/m^2$. In other embodiments, the basis weight may be less than about 25 $g/m^2$. In still other embodiments, the nonwoven material may have a basis weight of less than about 24 $g/m^2$. The nonwoven materials may also include additives, such as, for example, $CaCO_3$. Woven or knitted fabrics may also be used as cover layers 24, 26 in embodiments of the stretch laminates detailed herein.

Adhesive 30, 32 may be selected from any adhesives known to provide suitable attachment between elastomeric film 22 and cover layers 24, 26. In some embodiments, the adhesive may be a hot melt adhesive with a basis weight of less than about 15 $g/m^2$. According to one embodiment, the adhesive may be H2031 adhesive commercially available from Bostik Inc. of Middleton, Massachusetts. One characteristic of this adhesive is that, at 23°C, this adhesive has significant pressure-sensitive character useful for making a stretch laminate by hand. However, this adhesive is also suitable for use in fabricating stretch laminates from the elastomeric films and cover layers listed above using conventional stretch laminate manufacturing equipment, such equipment being well known in the art.

Elastomeric film 22 is mechanically pre-activated before attachment to at least one cover layer 24, 26. The elastomeric film 22 may be pre-activated by being stretched transversely to its web direction by more than 50% (i.e., strain > 50%). In some embodiments, an expansion by about 100% to about 500% occurs in relation to the starting width of elastomeric film 22. In alternate embodiments, elastomeric film 22 may be stretched in the web direction, stretched a direction other than the web direction or transverse to the web direction, or a combination of directions. The term "stretching" is to point to the fact that the expansion of elastomeric film 22 is not completely reversible and that a non-elastic fraction results in the film having a larger width following pre-activation (i.e., the elastomeric film does not have 100% recovery, and therefore has a percent set value). After expansion, elastomeric film 22 retracts and has a width that may be larger by about 10% to about 30% in relation to a starting width of the film. In other words, after the pre-activation expansion and retraction detailed below, elastomeric film 22 may exhibit a set of about 10% to about 30%.

In addition, because elastomeric film 22 includes both an elastically extensible material and at least one skin disposed on the elastically extensible material, and because these materials have different elasticity and recovery properties, the pre-activation process will physically alter these materials differently. During pre-activation, the skin and the elastically extensible material are similarly stretched (i.e., put under similar strain). However, after stretching, the skin and the elastically extensible material will retract and recover differently (i.e., have different set values). In comparison with the elastically extensible material, the skin is less elastic and therefore will have less recovery after stretching, a.k.a., a higher set value. The skin is also much thinner than the elastically extensible material, so when the thicker elastically extensible material retracts and recovers after pre-activation stretching, it will force the attached skin to retract with it. But because the skin cannot recover as much as the elastically extensible material, the skin buckles and wrinkles. Accordingly, the cross-sectional profile and the top view appearance of elastomeric film 22 are modified after a pre-activation process.

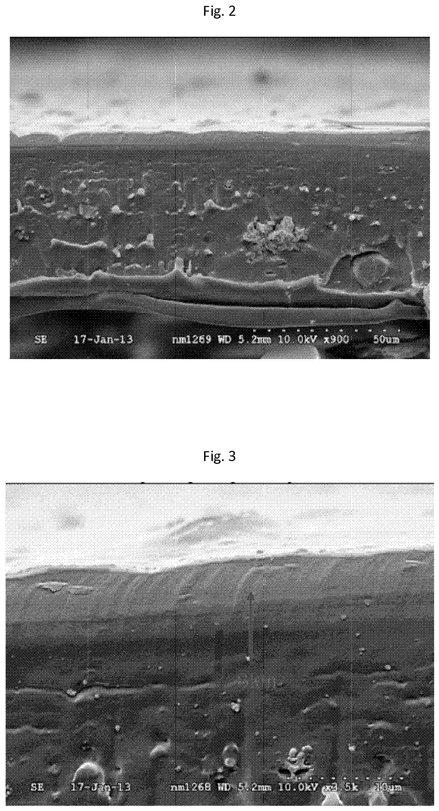

Figs. 2-5 are SEM photomicrographs of magnified cross-sections of elastomeric films. These SEM photomicrographs, as well as the other SEM photomicrographs included herein, were taken with a scanning electron microscope (Hitachi Model 3500). The information to calculate specific magnifications and distances is included in each individual SEM photomicrograph along the bottom of the frame. Fig. 2 is a SEM photomicrograph taken at approximately 900X magnification showing a cross-sectional view of a portion of an elastomeric film that has not been pre-activated. The skins are the thin strips of contrasting material at the top and the bottom of the cross-section, with the thicker elastically extensible material between the skins. The skin at the top of the cross-section is easier to discern due to the cross-section being cut cleaner in that region. Without pre-activation, the skins, and thus the outer surfaces of the elastomeric film, are substantially smooth in a cross-sectional view. Fig. 3 is a higher magnification image (approx. 3500X magnification) of the skin at the top of cross-section shown in the SEM photomicrograph of Fig. 2

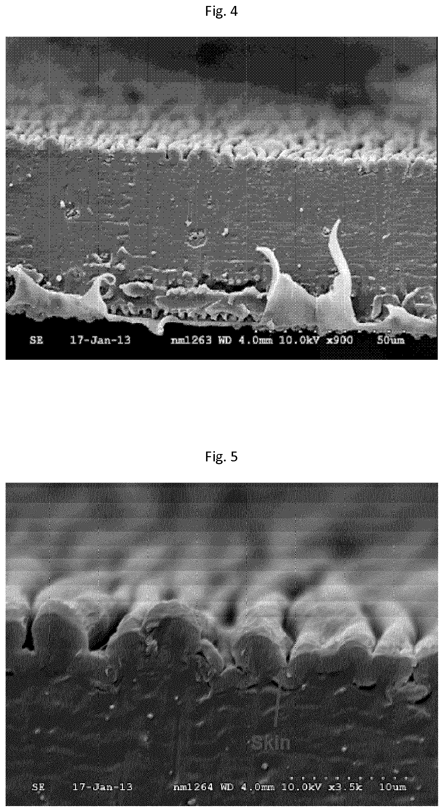

Fig. 4 is a SEM photomicrograph taken at approximately 900X magnification showing a cross-sectional view of a portion of an elastomeric film that has been pre-activated. Again, the skins are the thin strips of contrasting material at the top and the bottom of the cross-section, with the thicker elastically extensible material between the skins. With pre-activation, the skins, and thus the outer surfaces of the elastomeric film, are wrinkled in a cross sectional view. Fig. 5 is a higher magnification image (approx. 3500X magnification) of the skin at the top off the cross-section shown in the SEM photomicrograph of Fig. 4.

Figs. 4 and 5 show that after pre-activation, the skin of elastomeric film 22 includes a plurality of wrinkles having hills and furrows. For example, as shown in the non-limiting sample photographed in Fig. 5, there are approximately six hills and six furrows of varying size within the pictured approximately 35 $\mu$m of length taken along the cross-sectional profile of the pre-activated elastomeric film. This is in comparison to Fig. 3, in which there are no hills and no furrows within the pictured approximately 35 $\mu$m of length taken along the cross-sectional profile of an elastomeric film that was not pre-activated. However, as visible on the top surface of the elastomeric film shown in Fig. 3, one or more random hills and/or furrows may be present within a particular length of cross-sectional profile of an elastomeric film that was not pre-activated. These random hills and/or furrows are due to irregularities in the surface of the elastomeric film. Such random hills and/or furrows should not be confused with the hills and furrows of the plurality of wrinkles that are intentionally formed in an elastomeric film through a mechanical pre-activation process.

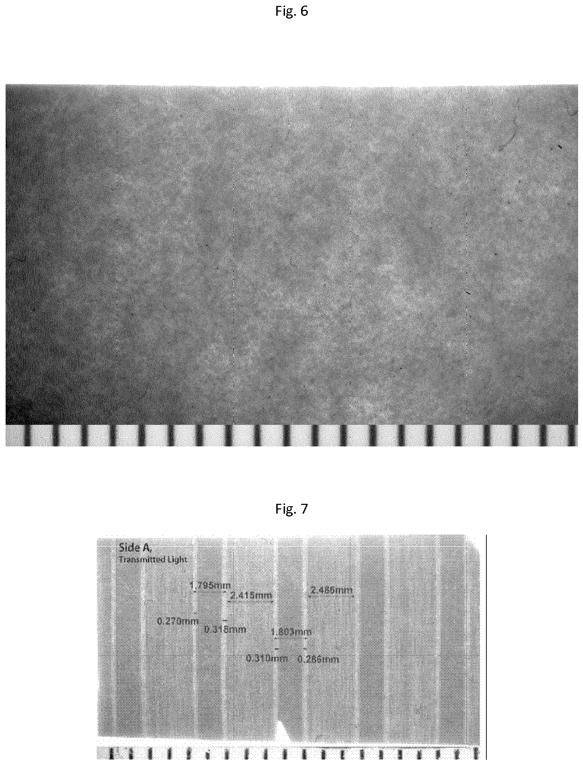

Figs. 6 and 7 are transmitted light photomicrographs of magnified top views of elastomeric films. The transmitted light photomicrographs were taken in color using a Nikon SMZ 1500 Stereo Light Microscope equipped with an Evolution Mp5C Digital camera with white light shining underneath the elastomeric film samples. The blue scale marks at the bottoms of Figs. 6 and 7 are in millimeters. This scale can be used to calculate specific magnifications and distances in the transmitted light photomicrographs. Fig. 6 is a transmitted light photomicrograph showing a top view of a portion of an elastomeric film that has not been pre-activated. Without pre-activation, the viewable outer surface of the elastomeric film (i.e., the top view of the skin), has no discernible stripes and is uniform in appearance. Fig. 7 is a transmitted light photomicrograph showing a top view of a portion of an elastomeric film that has been pre-activated. With pre-activation, the top view of the skin includes a plurality of stripes in varying thicknesses that relate to the size and pitch of the intermeshing discs of the mechanical pre-activation means. The stripes, referred to herein as activation stripes, indicate zones in the pre-activated elastomeric film in which there was a particular range of stretching during the pre-activation process. For example, as shown in non-limiting sample photographed in Fig. 7, there are medium thickness darker blue stripes indicative of a heavier intensity skin wrinkling, large thickness light blue stripes indicative of medium intensity skin wrinkling, and thin white stripes indicative of lower intensity skin wrinkling.

In addition, after pre-activation, but before utilizing elastomeric film 22 in the fabrication of stretch laminate 20, the film may optionally be printed with an image or motif that may show through the cover layers of the stretch laminate. The ink or other pigment utilized in printing will be deposited on the hills and into the furrows of the wrinkles of the pre-activated elastomeric film. Ink deposited onto the textured surface of a pre-activated elastomeric film allows for more contact surface area between the elastomeric film and the ink. Accordingly, when printing on a pre-activated elastomeric film, there is an image that is more strongly set on the film when compared to an image printed on the much smoother surface of an elastomeric film that has not been pre-activated.

Moreover, when stretch laminate 20 includes a pre-activated (and subsequently printed) elastomeric film that is mechanically activated, a non-distorted printed image on the film is evenly and reversibly stretched along with it. This is because before the image was printed on the pre-activated elastomeric film, a significant portion, or the entire, non-elastic fraction of elastomeric film 22 has already been removed in the pre-activation process. In other words, the set had been removed from elastomeric film 22 before printing. Therefore, the printed image will not substantially distort further with the later activation of stretch laminate 20, or in additional stretching of the laminate by a user. In contrast, if an image or motif were printed on an elastomeric film that was not pre-activated, and that printed film was then used in fabricating a stretch laminate, and then the stretch laminate was mechanically activated, the desired image would be distorted in the final activated stretch laminate. This is because the set of the elastomeric film was not removed prior to the printing process, and such set would be removed from the elastomeric film in the mechanical activation of the fabricated stretch laminate, thus distorting the original printed image. Likewise, if an elastomeric film is printed and then subsequently pre-activated, the set of the elastomeric film will not be removed prior to the printing process, and such set would be removed from the elastomeric film in the pre-activation process, thus distorting the original printed image.

And in another embodiment, a pre-activated elastomeric film may be stretched again during the printing of the film. The printed film is then relaxed and used in fabrication and activation of the stretch laminate. The resulting activated stretch laminate has an image or motif that is aesthetically pleasant when the stretch laminate is in a stretched condition during use (e.g., when a user stretches the stretch laminate in application or removal of an absorbent article).

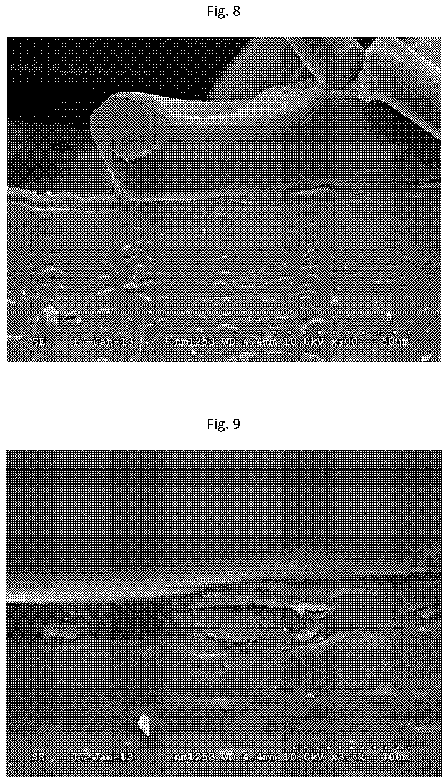

In fabricating stretch laminate 20, cover layers 24, 26 are attached to elastomeric film 22 through the use of adhesives 30, 32. When utilizing an elastomeric film that has not been pre-activated, the adhesive has a relatively smooth surface in which to adhere. Fig. 8 is a SEM photomicrograph taken at approximately 900X magnification showing a cross-sectional view of a portion of a stretch laminate that includes an elastomeric film that has not been pre-activated. The skin is the thin contrasting strip of material running about midway through the photomicrograph, with the thicker elastically extensible material below the skin. Disposed on top of the skin is an adhesive, which is also attached to the cover layer. In this exemplary embodiment, the fibers of the cover layer are the large cylindrical objects at the top of the SEM photomicrograph. Without pre-activation, the skins, and thus the outer surfaces of the elastomeric film, are substantially smooth in a cross-sectional view. Fig. 9 is a higher magnification image (approx. 3500X magnification) of the interaction between the skin and glue as shown in the SEM photomicrograph of Fig. 8.

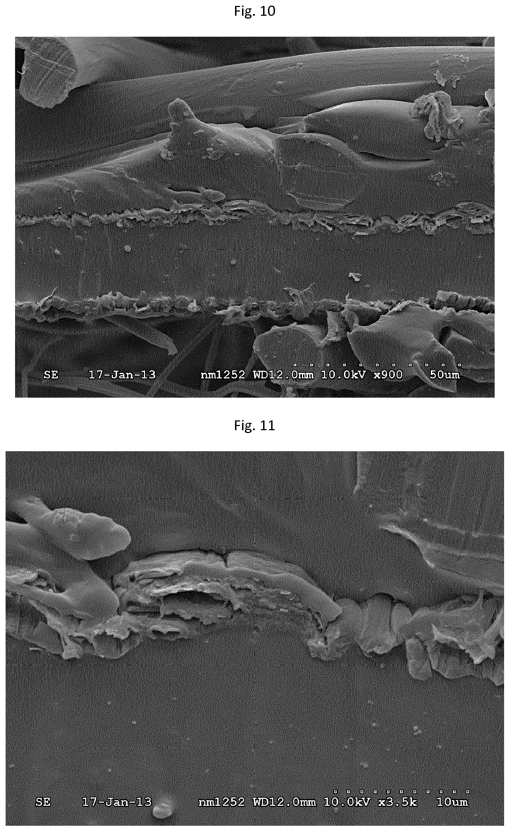

Fig. 10 is a SEM photomicrograph taken at approximately 900X magnification showing a cross-sectional view of a portion of a stretch laminate that includes an elastomeric film that has been pre-activated. The skins are the contrasting strips of material running through the middle of the photomicrograph, with the thicker elastically extensible material between the skins. With pre-activation, the skins, and thus the outer surfaces of the elastomeric film, are wrinkled in a cross sectional view. Disposed on outer surfaces of the skin (i.e., the surfaces not contacting the elastically extensible material) is adhesive, which is also attached to the cover layer. In this exemplary embodiment, the fibers of the cover layer are the large cylindrical objects at the top and bottom of the SEM photomicrograph. The pre-activated elastomeric film includes a textured skin with wrinkles in a cross-sectional view. Fig. 11 is a higher magnification image (approx. 3500X magnification) of the skin at the top of the elastomeric film shown in the SEM photomicrograph of Fig. 10.

As previously shown in Figs. 4 and 5, Figs. 10 and 11 also illustrate that after pre-activation, the skin of elastomeric film 22 is textured and includes a plurality of wrinkles having hills and furrows. Adhesive 30, 32 that attaches elastomeric film 22 to cover layers 24, 26 may flow over the hills and into the furrows of the pre-activated elastomeric film. Accordingly, adhesive 30, 32 is disposed in the furrows of the skin of elastomeric film 22. This is in comparison to Figs. 8 and 9, in which there are no furrows in the elastomeric film for the adhesive to flow into. Adhesive flowing into the furrows of a pre-activated elastomeric film allows for more contact surface area between the film and the adhesive, leading to a stronger bond between the cover layer and the film. Accordingly, when using the same amount of adhesive, there is a stronger bond (e.g., better creep resistance) between a pre-activated elastomeric film and a cover layer when compared to the bond between an elastomeric film that has not been pre-activated and a cover layer. Moreover, when employing a pre-activated elastomeric film, previous bond strengths between elastomeric films that were not pre-activated and a cover layer may be achievable with the use of less adhesive.

In embodiments of stretch laminates that include an elastomeric film that is pre-activated and subsequently printed, the ink or other pigment utilized in printing will be deposited on the hills and into the furrows of the wrinkles of the film. As detailed above, ink deposited onto the textured surface of a pre-activated elastomeric film will more strongly set on the film due to the additional contact surface area between the elastomeric film and the ink (in comparison to ink disposed on a elastomeric film that has not been pre-activated). Adhesive 30, 32 that attaches elastomeric film 22 to cover layers 24, 26 may also flow over the hills and into the furrows of the pre-activated elastomeric film. Accordingly, adhesive 30, 32 is disposed over the ink and/or in the furrows of the skin of pre-activated elastomeric film 22. And because the ink is more strongly set on the pre-activated elastomeric film, when using the same amount of adhesive, there is a stronger bond (*e.g.*, better creep resistance) between a pre-activated (and subsequently printed) elastomeric film and a cover layer when compared to the bond strength between an printed elastomeric film that has not been pre-activated and a cover layer. Moreover, when employing a pre-activated (and subsequently printed) elastomeric film, previous bond strengths between printed elastomeric films that were not pre-activated and a cover layer may be achievable with the use of less adhesive.

In addition, pre-activating an elastomeric film also lowers the force needed to later stretch the film (versus a non-activated film). This helps the later mechanical activation of the stretch laminate because the load required to activate a stretch laminate that is made with pre-activated film will be lower (versus a non-activated film).

The stretch laminate 20 is mechanically activated by stretching the laminate transversely in relation to the direction of the web. The technique for forming such a stretch laminate is generally referred to as "zero strain" stretch laminate formation. Examples of zero strain stretch laminate formations and the resulting stretch laminates are described in U.S. Pat. Nos. 4,116,892; 4,834,741; 5,143,679; 5,156,793; 5,167,897; 5,422,172; and 5,518,801. In the particular zero strain stretch laminate formation detailed herein, stretch laminate 20 may be guided through a nip between two profile rollers, each roller including at least two disk packets having a plurality of intermeshing disks that are situated on an axis. This process is also commonly referred to as a "ring rolling" process. Stretch laminate 20 is transversely stretched in places by the intermeshing disk packets. The region in which stretch laminate 20 is stretched by the intermeshing disk packets is referred to as stretch zone 66. In the roller sections between and/or outside the disk packets, the profile rollers form a gap, through which stretch laminate 20 is guided though essentially without transverse stretching. The regions in which stretch laminate 20 are not stretched by the intermeshing disk packets are referred to as anchoring zones 68, 69.

In stretch zone 66, the fibers of cover layers 24, 26 are modified and irreversibly stretched due to fiber tears and rearrangements. However, because stretch laminate 20 includes elastomeric film 22 that has been pre-activated, the elastomeric film between the cover layers is not further substantially stretched during the mechanical activation process *(i.e.,* a substantial amount of set is not added to the film during activation of the stretch laminate). In other words, elastomeric film 22 has substantially the same transverse width before and after mechanical activation of stretch laminate 20. This is because a significant portion (or the entire) non-elastic fraction of elastomeric film 22 (*i.e.*, the set value) has already been removed in the pre-activation process. Accordingly, the expansion property of the fabricated stretch laminate 20 is improved in stretch zones 66 in the cross-direction (*i.e.*, transverse in relation to the longitudinal web direction) due to mechanical activation. Following activation, when applying minimal force, stretch laminate 20 is easily expandable in the cross-direction.

Thus, in mechanically activated stretch laminate 20 (which is apt to fabricate an ear panel or other absorbent article parts), elastomeric film 22 is activated in both stretch zone 66 and anchoring zones 68, 69. In previous stretch laminates that did not include a pre-activated elastomeric film, the mechanically activated stretch laminate would include an elastomeric film that was activated in stretch zone 66, but not activated in anchoring zones 68, 69. Accordingly, the portion of the elastomeric film that was located in the anchoring zones did not contain a plurality of wrinkles. Also, when the viewed from the top, the portion of the elastomeric film that was located in the anchoring zones did not include a plurality of activation stripes. Further, in previous stretch laminates that did not include a pre-activated elastomeric film, the adhesive bonding the elastomeric film to the cover layers was in contact with a non-wrinkled surface on the surface of the film located in both stretch zone 66 and anchoring zones 68, 69 during fabrication. In stretch laminate 20 described herein, adhesive 30, 32 that bonds elastomeric film 22 to cover layers 24, 26 is in contact with a textured surface having a plurality of wrinkles on the surface of the film located in both stretch zone 66 and anchoring zones 68, 69 during fabrication, providing for increased bond strength between the film and the cover layers.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

All documents cited in the Detailed Description are, in relevant part, incorporated herein by reference; the citation of any document is not to be construed as an admission that it is prior art with respect to the present invention. To the extent that any meaning or definition of a term in this disclosure conflicts with any meaning or definition of the term in a document incorporated by reference, the meaning or definition assigned to the term in this disclosure shall govern for this disclosure.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

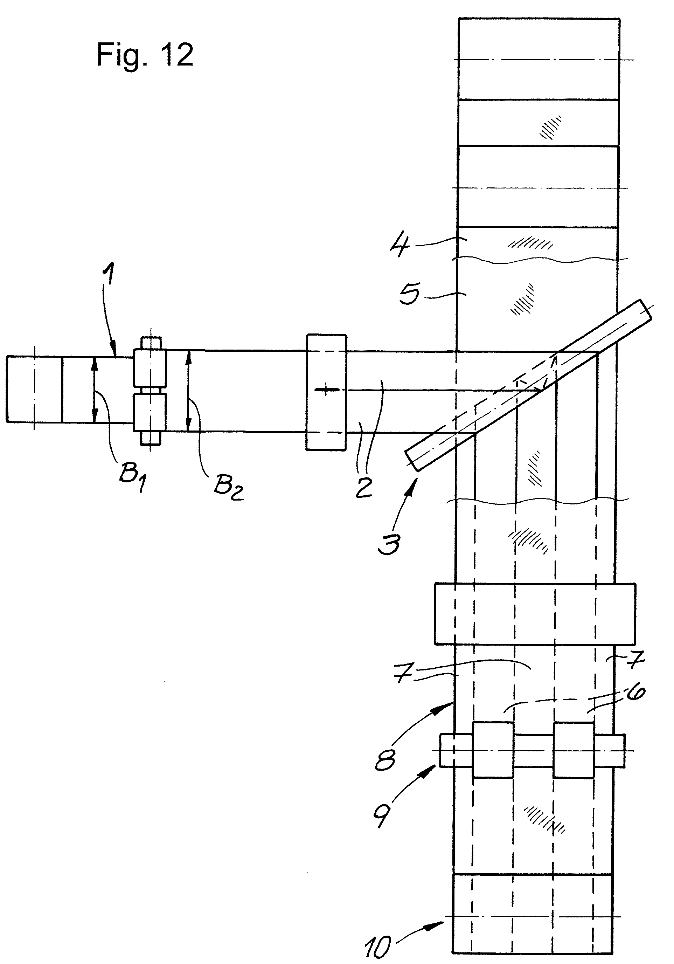

The first embodiment of the method to produce a laminate according to the invention is explained below. Fig. 12 schematically shows the method of making an elastic laminate.

In the method shown in the figure, an elastic film 1 is stretched transverse to a web direction in a pre-activation station, and after elastic relaxation is cut into strips 2. The strips 2 are guided over deflectors 3, and as parallel strips are laminated next to one another between two nonwoven material webs 4 and 5. The material webs 4 and 5 are guided above and beneath the strips 2 without pre-stretching, and are adhesively or thermally bonded to the strips 2. The view clearly shows that the elastic strips 2 are laminated at a spacing from one another between the cover layers, and that the nonwoven cover layers 4 and 5 are directly joined together in the gaps between the elastic strips 2. Elastic regions 6 and inelastic regions 7 are thus formed in the laminate 8. The laminate is supplied to an activation unit 9, in which the laminate 8 is stretched transverse to the web direction in the regions 6 rendered elastic by to the laminated strips 2. After elastic relaxation, the laminate 8 is wound into a roll 10.

The elastic film 1 is stretched transverse to the web direction by more than 50% in the pre-activation station 11. The stretching occurs essentially uniformly over the entire width of the film 1. The elastic film is preferably stretched by 100% to 300% relative to its starting width of the elastic film, stretching to 500% also being possible. After the elastic relaxation, the elastic film 1 has a width $B_2$ that is 10% to 30% greater than the starting width $B_1$ of the elastic film. The stretching of the elastic film 1 constitutes a pre-activation that has an advantageous effect on the elongation values of the laminate 8. A stretching roller system composed of intermeshing profile rollers may be used to pre-activate the elastic film 1.

A single-layer elastomer film or a multilayer film having an elastomeric core layer composed of styrene-isoprene-styrene block copolymers, styrene-butadiene-styrene block copolymers, styrene-ethylene/butylene-styrene block copolymers, polyurethanes, ethylene copolymers, or polyether block amides may be used as elastic film. An elastic blown film composed of a polyolefin elastomer is particularly preferably used.

The stretching of the laminate 8 is limited to the regions of the laminate 8 that have been made elastic by the laminated and pre-activated strips 2. For this purpose, the laminate 8 is guided through a nip between two profile rollers that include at least two packets of a plurality of disks mounted on an axle. The laminate is stretched in places by the intermeshing disk packets of the two profile rollers. As a result of the stretching, textile structures of the cover layers are altered in the elastic regions 6 of the laminate, and the elongation properties of the laminate 8 in the CD direction, i.e. transverse to the web longitudinal direction, are improved. Relative to the overall width of the laminated strips 2, the maximum transverse stretching of the laminate during stretching corresponds to the value by which the elastic film 1 is stretched during pre-activation. The transverse stretching of the laminate 8 relative to the overall width of the laminated strips is preferably 50% to 90% of the value by which the elastic film 1 is stretched during pre-activation. Next to the disk packets, the profiles have roller sections in which the laminate is not subjected to transverse stretching. These sections define a nip through which the laminate 8 is guided essentially without transverse stretching.

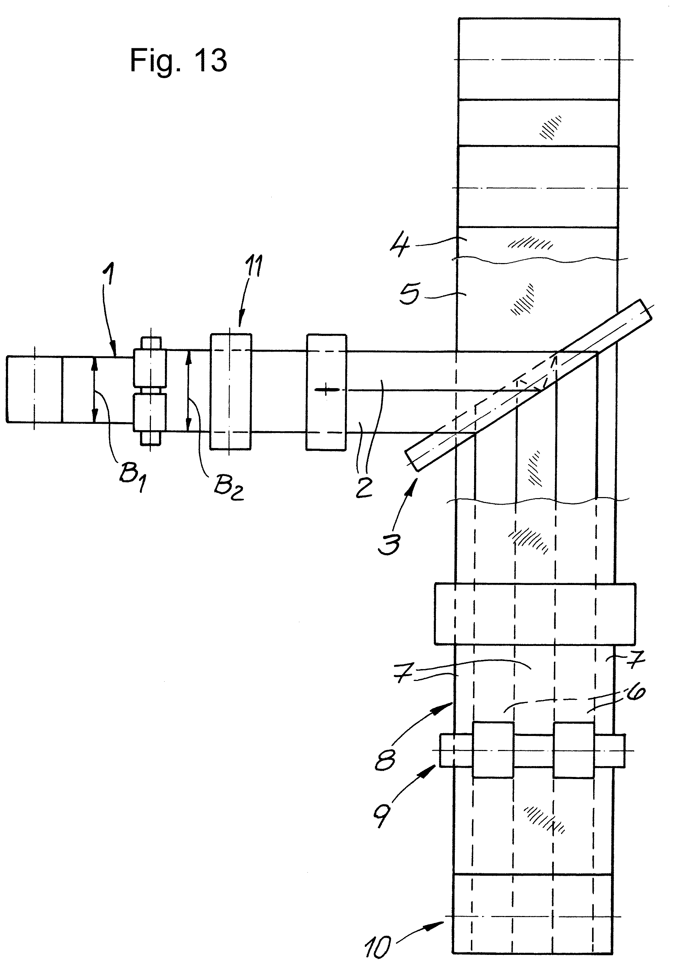

The second embodiment of the method will be illustrated in further detail with reference to a similar illustrated embodiment. Fig. 13 is a schematic representation of the second method of making a printed, elastic laminate.

With the method shown in the figure an elastic film 1 is cut into strips 2 that are guided across a deflector 3 and supplied to a laminator 4 as parallel strips. The strips 2 are laminated in a laminating direction 4 between textile surface layers 5 and 6 that are fed from above and below to the strips 2. The strips 2 and the textile surface layers 5 and 6 are glued together or connected to each other thermally. The view in the figure demonstrates that the elastic strips 2 are laminated at a spacing from each other between the surface layers 5 and 6 and that the textile surface layers 5 and 6 are directly connected to each other in gaps between the elastic strips 2. This way, elastic regions 8 and 10 as well as inelastic regions 9 are created in the laminate 7. The laminate is then supplied to an activator 10 in which the laminate 7 is stretched transversely at the regions 8 rendered elastic by the laminated strips 2 relative to the direction of the web. A stretch-roller apparatus having profile rollers that mesh with each other is used for stretching the laminate 7. Stretching modifies the textile structures of the surface layers, and the expansion property of the laminate 7 is improved in the CD direction, that is transversely of the longitudinal web direction. Following activation, the laminate is easily expandable in the CD direction by minimal force to an expansion limit that is determined by the activation.

The textile surface layers 5 and 6 are made of, in particular, nonwoven fabric; woven or knitted fabrics are also possible. A single-layer or multilayer elastomer film can be used as elastic film 1 having an elastomer core layer made of styrene-isoprene-styrene block copolymers, styrene-butadiene-styrene block copolymers, styrene-ethylene-butylene-styrene block copolymers, polyurethanes, ethylene copolymers, or polyether block amides. An elastic blown film made of a polyolefin elastomer is preferred.

Before cutting the film into strips 2, the elastic film 1 is printed in a printing station 11 with a motif that is visible through the textile surface layer 5 and 6 of the laminate 7. Printing is preferably done by a rotary printing method, particularly flexography. The printed motif can be, for example, a striped motif made of parallel colored stripes that extend in the longitudinal direction of the elastic film of the web.

Before printing, the elastic film 1 is stretched transversely of the web by more than 50%. Preferably, an expansion by 100% to 500% is effected relative to a starting width of the elastic film. After the elastic retraction, the elastic film 1 has a width B2 that is larger by 10% to 30% than a starting width B1 of the elastic film. Following the retraction, the elastic film 1 is printed and subsequently cut into strips 2. Expanding and/or stretching the elastic film 1 constitutes pre-activation. Pre-activation of the elastic film has considerable advantages with regard to the expansion values of the laminate 7. Due to pre-activation of the elastic film 1 prior to the printing process, it is also possible to improve the printed image of the elastic laminate 7, the reason for this being that during stretching of the laminate 7, the printed image is evenly and reversibly expanded along with the laminate, and pre-activation of the elastic film 1 results in the laminate 7 completely resetting itself following stretching in the activation apparatus 10.

**Claims**

1. A stretch laminate comprising:

   a. at least one cover layer;
   b. an elastomeric film attached to the cover layer, the elastomeric film having two surfaces and a skin being an extensible material having less tackiness than the underlying elastically extensible material on at least one of the surfaces; and
   c. an adhesive disposed between the skin and the cover layer

   wherein the stretch laminate has at least one anchoring zone and at least one stretch zone;
   wherein the skin that is located in the anchoring zone has a plurality of wrinkles,
   wherein the skin that is located in the stretch zone has a plurality of wrinkles that are substantially perpendicular to the stretch direction of the stretch laminate.
   wherein the elastomeric film has been pre-activated through a ring rolling process, **characterized in that** the wrinkles have hills and an ink is disposed on at least some of the hills.

2. The stretch laminate of claim 1 , wherein the wrinkles have furrows and at least some of the adhesive is disposed in at least some of the furrows.

3. The stretch laminate of any of the claims 1 to 2, wherein the adhesive touches the elastomeric film below the skin at least in places.

4. The stretch laminate of any of the claims 1 to 3, wherein the elastomeric film comprises a polyolefin elastomer.

5. The stretch laminate of any of the claims 1 to 4, wherein the elastomeric film is a blown film.

6. The stretch laminate of any of the claims 1 to 5, wherein the elastomeric film is between about 20 $\mu$m and about 60 $\mu$m thick.

7. The stretch laminate of claim 6, wherein the elastomeric film is about 40 $\mu$m thick.

8. The stretch laminate of any of claims 1 to 7, wherein the skin is between about 1 $\mu$m and about 10 $\mu$m thick.

9. The stretch laminate of any of claims 1 to 8, wherein the wrinkles have furrows and an ink is disposed in at least some of the furrows.

10. The stretch laminate of claim 9, wherein at least some of the ink is covered by the adhesive such that at least some of the ink is disposed between the skin and the adhesive.

11. The stretch laminate of any of the claims 1 to 10, wherein the ink touches the elastomeric film below the skin at least in places.

**Patentansprüche**

1. Stretchlaminat, umfassend:

a. mindestens eine Deckschicht;

b. eine Elastomerfolie, die an der Deckschicht befestigt ist, wobei die Elastomerfolie zwei Oberflächen und auf mindestens einer der Oberflächen eine Haut aufweist, welche aus einem dehnbaren Material besteht, das weniger klebrig ist als das darunterliegende elastisch dehnbare Material; und

c. einen Klebstoff, der zwischen der Haut und der Deckschicht angeordnet ist,

wobei das Stretchlaminat mindestens einen Befestigungsbereich und mindestens einen Dehnungsbereich aufweist, wobei die Haut, die sich in dem Befestigungsbereich befindet, eine Vielzahl von Falten aufweist, wobei die Haut, die sich in dem Dehnungsbereich befindet, eine Vielzahl von Falten aufweist, die im Wesentlichen senkrecht zu der Dehnrichtung des Stretchlaminats liegen, wobei die Elastomerfolie durch ein Ringwalzverfahren voraktiviert wurde, **dadurch gekennzeichnet, dass** die Falten Erhebungen aufweisen und eine Tinte auf mindestens einigen der Erhebungen aufgebracht wird.

2. Stretchlaminat nach Anspruch 1, wobei die Falten Vertiefungen aufweisen, und mindestens ein Teil des Klebstoffs ist in mindestens einigen der Vertiefungen angeordnet.

3. Stretchlaminat nach einem der Ansprüche 1 bis 2, wobei der Klebstoff die Elastomerfolie unter der Haut mindestens an einigen Stellen berührt.

4. Stretchlaminat nach einem der Ansprüche 1 bis 3, wobei die Elastomerfolie ein Polyolefin-Elastomer umfasst.

5. Stretchlaminat nach einem der Ansprüche 1 bis 4, wobei die Elastomerfolie eine Blasfolie ist.

6. Stretchlaminat nach einem der Ansprüche 1 bis 5, wobei die Elastomerfolie zwischen etwa 20 $\mu$m und etwa 60 $\mu$m dick ist.

7. Stretchlaminat nach Anspruch 6, wobei die Elastomerfolie etwa 40 $\mu$m dick ist.

8. Stretchlaminat nach einem der Ansprüche 1 bis 7, wobei die Haut zwischen etwa 1 $\mu$m und etwa 10 $\mu$m dick ist.

9. Stretchlaminat nach einem der Ansprüche 1 bis 8, wobei die Falten Vertiefungen aufweisen und eine Tinte in mindestens einigen der Vertiefungen angeordnet ist.

10. Stretchlaminat nach Anspruch 9, wobei mindestens ein Teil der Tinte durch den Klebstoff bedeckt ist, so dass mindestens ein Teil der Tinte zwischen der Haut und dem Klebstoff angeordnet ist.

11. Stretchlaminat nach einem der Ansprüche 1 bis 10, wobei die Tinte die Elastomerfolie unter der Haut zumindest an einigen Stellen berührt.

**Revendications**

1. Laminé étirable comprenant :

a. au moins une couche de recouvrement ;

b. un film élastomérique fixé à la couche de recouvrement, le film élastomérique comportant deux surfaces et une pellicule qui est un matériau extensible ayant moins d'adhérence que le matériau élastiquement extensible sous-jacent sur au moins une des surfaces ; et

c. un adhésif disposé entre la pellicule et la couche de recouvrement,

le laminé étirable comportant au moins une zone d'ancrage et au moins une zone d'étirement ; la pellicule qui se trouve dans la zone d'ancrage comportant une pluralité de plis, la pellicule qui se trouve dans la zone d'étirement comportant une pluralité de plis qui sont sensiblement perpendiculaires au sens d'étirement du laminé étirable, le film élastomérique ayant été préactivé par un procédé de laminage circulaire, **caractérisé en ce que** les plis comportent des bosses et qu'une encre est disposée sur au moins certaines des bosses.

2. Laminé étirable selon la revendication 1, dans lequel les plis comportent des sillons et au moins une partie de l'adhésif set disposé dans au moins certains des sillons.

3. Laminé étirable selon l'une quelconque des revendications 1 à 2, dans lequel l'adhésif touche le film élastomérique en-dessous de la pellicule au moins à certains endroits.

4. Laminé étirable selon l'une quelconque des revendications 1 à 3, dans lequel le film élastomérique comprend un élastomère de polyoléfine.

5. Laminé étirable selon l'une quelconque des revendications 1 à 4, dans lequel le film élastomérique est un film soufflé.

6. Laminé étirable selon l'une quelconque des revendications 1 à 5, dans lequel le film élastomérique a une épaisseur d'environ 20 $\mu$m à environ 60 $\mu$m.

7. Laminé étirable selon la revendication 6, dans lequel le film élastomérique a une épaisseur d'environ 40 $\mu$m.

8. Laminé étirable selon l'une quelconque des revendications 1 à 7, dans lequel la pellicule a une épaisseur d'environ 1 $\mu$m à environ 10 $\mu$m.

9. Laminé étirable selon l'une quelconque des revendications 1 à 8, dans lequel les plis comportent des sillons et une encre est disposée dans au moins certains des sillons.

10. Laminé étirable selon la revendication 9, dans lequel au moins une partie de l'encre est recouverte par l'adhésif, de sorte qu'au moins une partie de l'encre est disposée entre la pellicule et l'adhésif.

11. Laminé étirable selon l'une quelconque des revendications 1 à 10, dans lequel l'encre touche le film élastomérique en-dessous de la pellicule au moins à certains endroits.

Fig. 1A

Fig. 1B

Fig. 2

Fig. 3

Fig. 4

Fig. 5

Fig. 6

Fig. 7

Fig. 8

Fig. 9

Fig. 10

Fig. 11

## Fig. 12

## Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1686209 A1
- US 6310154 B
- US 4116892 A
- US 4834741 A
- US 5143679 A
- US 5156793 A
- US 5167897 A
- US 5422172 A
- US 5518801 A